# EUROPÄISCHE PATENTSCHRIFT

(11) **EP 3 786 438 B1**
(45) Veröffentlichungstag und Bekanntmachung des Hinweises auf die Patenterteilung: **15.07.2026**
(21) Anmeldenummer: 20189789.9
(22) Anmeldetag: 06.08.2020
(51) Int. Cl.: F02F 3/22

(54) **KOLBEN EINER BRENNKRAFTMASCHINE**
PISTON OF A COMBUSTION ENGINE
PISTON POUR UN MOTEUR À COMBUSTION INTERNE

(30) Priorität: 27.08.2019 DE 102019122877
(43) Veröffentlichungstag der Anmeldung: 03.03.2021
(73) Patentinhaber: Everllence SE, 86153 Augsburg (DE)
(72) Erfinder: Shaer, Talat, 86153 Augsburg (DE)

(56) Entgegenhaltungen:
- CN-U- 205 013 072
- DE-A1- 102012 207 951
- DE-A1- 102013 002 232
- DE-B- 1 204 885

## Beschreibung

Die Erfindung betrifft einen Kolben einer Brennkraftmaschine nach dem Oberbegriff des Anspruchs 1 oder nach dem Oberbegriff des Anspruchs 6.

Aus der DE 35 18 721 C2 ist ein Kolben einer Brennkraftmaschine bekannt, der ein Kolbenoberteil und ein Kolbenunterteil umfasst, die vorzugsweise miteinander verschraubt sind. Im Kolbenunterteil ist ein Kolbenbolzen gelagert, wobei der Kolbenbolzen der Anbindung des Kolbens an eine Pleuelstange der Brennkraftmaschine dient. Der Kolben gemäß DE 35 18 721 C2 ist ölgekühlt, wobei zwischen dem Kolbenoberteil und dem Kolbenunterteil einerseits ein erster, innerer Kühlraum für Kühlöl und andererseits ein zweiter, äußerer Kühlraum für Kühlöl ausgebildet ist, und wobei der innere Kühlraum mit dem äußeren Kühlraum über mindestens eine Überleitbohrung verbunden ist. Um Kühlöl in den inneren Kühlraum einzuführen, ist nach diesem Stand der Technik in die Pleuelstange eine Zuführbohrung für Kühlöl integriert, wobei das Kühlöl ausgehend von der Pleuelstange in den inneren Kühlraum mithilfe einer mehrteiligen Kühlölführhülse überführbar ist. Ein erster, halsartiger Teil der Kühlölführhülse ist nach der DE 35 18 721 C2 unverschiebbar im Kolbenunterteil des Kolbens befestigt. Mit diesem ortsfesten, halsartigen Teil der Kühlölführhülse wirkt ein trichterartiger, beweglicher Teil der Kühlölführhülse derart zusammen, dass ein Federelement, welches zwischen den beiden Teilen der Kühlölführhülse angreift, den trichterartigen Teil derselben federnd in Gleitkontakt gegen einen Pleuelkopf der Pleuelstange drückt. Die Verwendung solcher federbelasteter Kühlölführhülsen zur Überführung des Kühlöls ausgehend von der Bohrung in der Pleuelstange in den inneren Kühlraum ist von Nachteil, da die Montage solcher Kühlölführhülsen mit großem Aufwand verbunden ist. Ferner verursachen die separaten Federelemente hohe Reibkräfte zwischen der Kühlölführhülse und der Pleuelstange.

Aus der DE 10 2013 002 232 A1 ist ein Kolben einer Brennkraftmaschine bekannt, bei welchem die Kühlölführhülse als geschlitzte Hülse ausgebildet ist, die mit einer Führungsfläche federelastisch gegen eine Stützfläche des Kolbenunterteils drückt. Nach diesem Stand der Technik ist die als geschlitzte Hülse ausgebildete Kühlölführhülse des Kolbens einteilig ausgebildet und drückt federelastisch gegen das Kolbenunterteil, sodass auf ein separates Federelement verzichtet werden kann.

CN 205 013 072 U offenbart einen zweiteiligen Kolben mit einer Kühlölführhülse, wobei in die Stützfläche des Kolbenunterteils eine in Umfangsrichtung umlaufende Nut für eine Dichtung eingebracht ist.

Es besteht Bedarf daran, die Funktionsfähigkeit eines gekühlten Kolbens einer Brennkraftmaschine weiter zu verbessern.

Hiervon ausgehend liegt der vorliegenden Erfindung die Aufgabe zugrunde, einen neuartigen Kolben einer Brennkraftmaschine zu schaffen.

Nach einem ersten Aspekt der Erfindung wird diese Aufgabe wird durch einen Kolben nach Anspruch 1 gelöst. Hiernach ist in die Führungsfläche der Kühlölführhülse und/oder in die Stützfläche des Kolbenunterteils mindestens eine in Umfangsrichtung umlaufende Nut eingebracht. Weiterhin ist die Kühlölführhülse als geschlitzte Hülse mit einem sich in Axialrichtung erstreckenden Schlitz ausgebildet.

Nach einem zweiten Aspekt der Erfindung wird diese Aufgabe durch einen Kolben nach Anspruch 5 gelöst. Hiernach ist in die Führungsfläche der Kühlölführhülse und/oder in die Stützfläche des Kolbenunterteils mindestens eine in Umfangsrichtung begrenzte Öltasche eingebracht.

Mit beiden erfindungsgemäßen Aspekten ist es möglich, in einem Bereich zwischen der Führungsfläche der Kühlölführhülse und der Stützfläche des Kolbenunterteils Öl zur Schmierung definiert einzubringen. Hiermit können Reibung und ein reibungsbedingter Verschleiß von Kolbenunterteil und Kühlölführhülse reduziert oder gar vollständig vermieden werden. Dies verbessert die Funktionsfähigkeit des gekühlten Kolbens.

Nach einer vorteilhaften Weiterbildung des ersten oder zweiten Aspekts der Erfindung ist in die Kühlölführhülse mindestens eine Ausnehmung, vorzugsweise sind mindestens zwei Ausnehmungen, die sich in Radialrichtung erstreckt und die Kühlölführhülse durchdringt, eingebracht, über die Schmieröl einem Bereich zwischen der Kühlölführhülse und dem Kolbenunterteil zuführbar ist. Dies erlaubt eine besonders vorteilhafte Versorgung der in Umfangsrichtung umlaufenden Nut und/oder der in Umfangsrichtung begrenzten Öltasche mit Schmieröl.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: einen ausschnittsweisen Querschnitt durch einen ersten erfindungsgemäßen Kolben im Bereich einer Kühlölführhülse;
- Fig. 2:: das Detail II der Fig. 1 im Bereich der Kühlölführhülse;
- Fig. 3:: ein alternatives Detail eines zweiten erfindungsgemäßen Kolbens im Bereich der Kühlölführhülse;
- Fig. 4:: eine Weiterbildung einer Kühlölführhülse des Kolbens nach Fig. 2 oder 3;
- Fig. 5:: eine alternative Kühlölführhülse des Kolbens.

Die hier vorliegende Erfindung betrifft einen ölgekühlten Kolben einer Brennkraftmaschine, insbesondere einer als Dieselmotor oder Gasmotor oder Diesel-GasMotor ausgeführten Brennkraftmaschine, wie zum Beispiel einer Schiffsdieselbrennkraftmaschine.

Ein solcher Kolben wird auch als Tauchkolben bezeichnet.

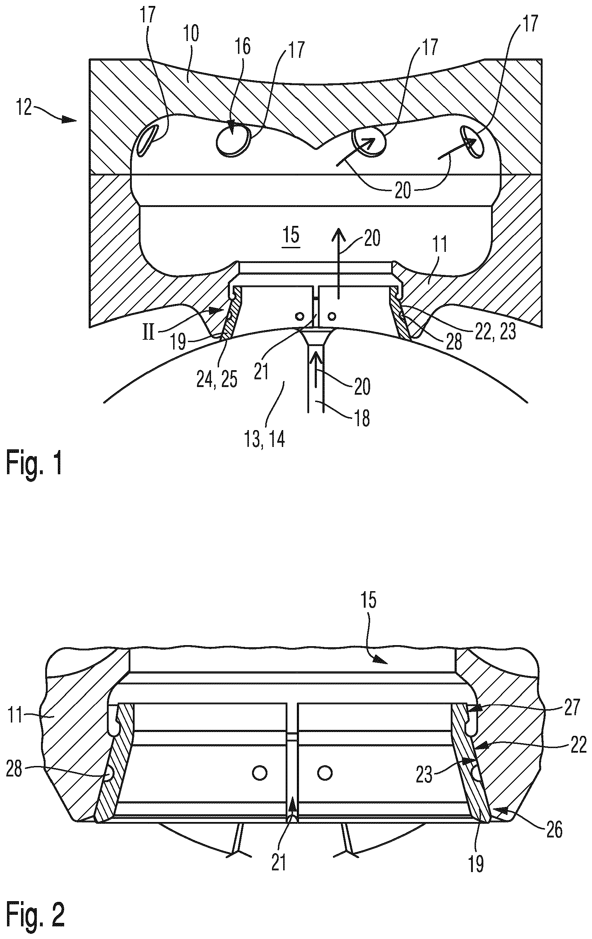

Fig. 1 und 2 zeigen jeweils Querschnitte durch einen ersten erfindungsgemäßen Kolben 12 einer Brennkraftmaschine in unterschiedlichen Schnittrichtungen, wobei der Kolben 12 ein Kolbenoberteil 10 und ein Kolbenunterteil 11 umfasst. Das Kolbenoberteil 10 und das Kolbenunterteil 11 sind vorzugsweise aus einem Leichtmetall, Stahl oder Sphäroguss gefertigt. Das Kolbenoberteil 10 und das Kolbenunterteil 11 stützen sich auf einander ab und sich vorzugsweise über als Dehnschrauben ausgeführte Befestigungsmittel miteinander verbunden.

In einer Bohrung des Kolbenunterteils 11 ist ein Kolbenbolzen (nicht gezeigt) gelagert, wobei der Kolbenbolzen der Anbindung des Kolbens an eine Pleuelstange 13 der Brennkraftmaschine dient. Von der Pleuelstange 13 ist in Fig. 2 ein sogenannter Pleuelkopf 14 gezeigt.

Zwischen dem Kolbenoberteil 10 und dem Kolbenunterteil 11 ist einerseits ein erster, innerer Kühlraum 15 und andererseits ein zweiter, äußerer Kühlraum 16 für Kühlöl ausgebildet, wobei der innere Kühlraum 15 mit dem äußeren Kühlraum 16 gemäß Fig. 2 über Überleitbohrungen 17 verbunden ist.

Kühlöl, welches der Kühlung des Kolbens 12 dient, ist dem Kolben 12, nämlich dem ersten, inneren Kühlraum 15 des Kolbens 12, über eine Bohrung 18, die sich durch die Pleuelstange 13 und dem Pleuelkopf 14 erstreckt, zuführbar. Mit der Pleuelstange 13 bzw. dem Pleuelkopf 14 der Pleuelstange 13 wirkt dabei eine Kühlölführhülse 19 zusammen. Die Strömung des Kühlöls ist durch Pfeile 20 visualisiert.

Die Kühlölführhülse 19 ist als geschlitzte Hülse ausgebildet. Ein Schlitz 21 der Kühlölführhülse 19 erstreckt sich in Axialrichtung des Kolbens bzw. der Kühlölführhülse 19.

In demontiertem Zustand verfügt die Kühlölführhülse 19 über einen Außendurchmesser, der größer ist als ein Innendurchmesser einer Ausnehmung im Kolbenunterteil 11, in welche die Kühlölführhülse 19 einzusetzen ist. Zum Einsetzen der Kühlölführhülse 19 in diese Ausnehmung des Kolbenunterteils 11 wird die Kühlölführhülse 19 unter Verkleinerung einer sogenannten Maulweite des Schlitzes 21 zusammengedrückt, wobei nach dem Einsetzen der Kühlölführhülse 19 in das Kolbenunterteil 11 eine Führungsfläche 22 der Kühlölführhülse 19 federelastisch gegen eine korrespondierende Stützfläche 23 des Kolbenunterteils 11 drückt.

Die Kühlölführhülse 19 ist einstückig bzw. einteilig ausgeführt und wird ohne separates Federelement im Kolbenunterteil 11 montiert.

Vorzugsweise sind die Führungsfläche 22 der Kühlölführhülse 19 und die Stützfläche 23 des Kolbenunterteils 11, gegen welche die erste Führungsfläche 22 der Kühlölführhülse 19 federelastisch drückt, kegelstumpfartig konturiert. Hierdurch wird sichergestellt, dass die Kühlölführhülse 19 ferner mit einer weiteren Führungsfläche 24 federelastisch gegen eine Stützfläche 25 des Pleuelkopfs 14 der Pleuelstange 13 drückt.

Die vorzugsweise kegelstumpfartige Führungsfläche 22 der Kühlölführhülse 19 und die korrespondierende Stützfläche 23 des Kolbenunterteils 11 verjüngen sich hierbei ausgehend von einem der Pleuelstange 13 zugewandten Ende 26 der Kühlölführhülse 19 in Axialrichtung des Kolbens bzw. der Kühlölführhülse 19 gesehen in Richtung auf ein von der Pleuelstange 13 abgewandtes Ende 27 der Kühlölführhülse 19.

Wie bereits ausgeführt, wird nach Montage der Kühlölführhülse 19 in der entsprechenden Ausnehmung im Kolbenunterteil 11 die Kühlölführhülse 19 federelastisch mit der Führungsfläche 22 gegen die Stützfläche 23 des Kolbenunterteils.

Dann, wenn anschließend die Pleuelstange 13 montiert wird, wird die Kühlölführhülse 19 weiter zusammengedrückt, sodass infolge der kegelstumpfartigen Konturierung der Führungsfläche 22 sowie der Stützfläche 23 die Kühlölführhülse 19 mit der weiteren Führungsfläche 24 gegen die entsprechende Stützfläche 25 des Pleuelkopfs 14 der Pleuelstange 13 federelastisch drückt. Hierdurch wird ein Abheben der Kühlölführhülse 19 von dem Pleuelkopf 14 der Pleuelstange 13 unterbunden und stets eine gute Dichtung zwischen dem Pleuelkopf 14 der Pleuelstange 13 und der Kühlölführhülse 19 gewährleistet.

Nach dem ersten Aspekt der Erfindung ist in die vorzugsweise kegelstumpfartig, sich verjüngend konturierte Führungsfläche 22 der Kühlölführhülse 19 und/oder in die korrespondierend konturierte Stützfläche 23 des Kolbenunterteils 11 mindestens eine in Umfangsrichtung umlaufende Nut eingebracht. Fig. 1 und 2 zeigen dabei ein Ausführungsbeispiel, in welchem eine solche Nut 28 ausschließlich in die Führungsfläche 22 der Kühlölführhülse 19 eingebracht ist. Dieser in Umfangsrichtung umlaufenden Nut 28 kann Schmieröl insbesondere über den Schlitz 21 der geschlitzten Kühlölführhülse 19 zugeführt werden, wobei das Schmieröl den Schlitz 21 durchtritt und in die Nut 28 der Kühlölführhülse 19 eintritt. Hiermit kann ein Kontaktbereich zwischen der Kühlölführhülse 19 und dem Kolbenunterteil 11 definiert geschmiert werden, um hier Reibung und Verschleiß zu reduzieren.

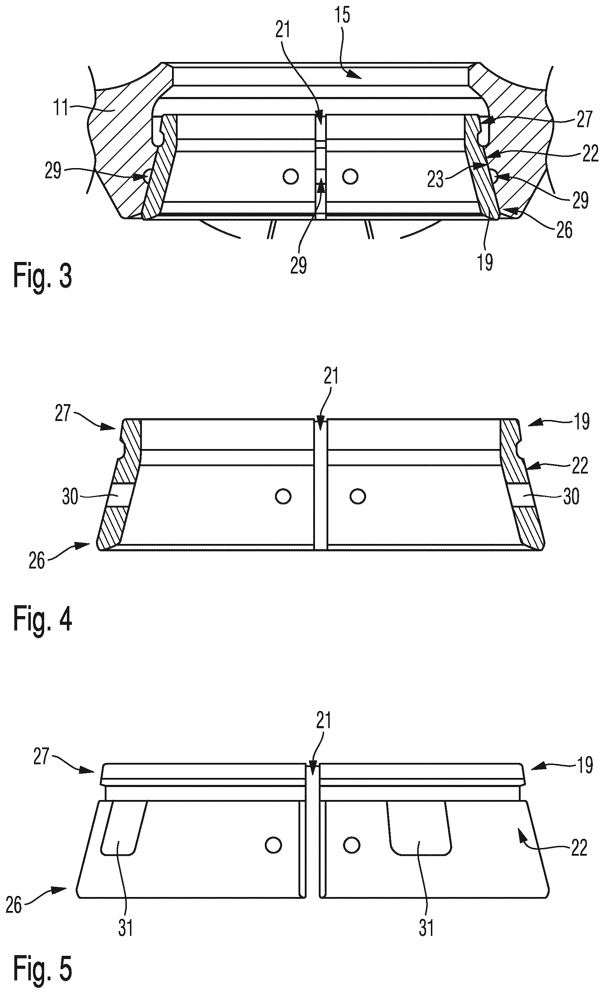

Fig. 3 zeigt ein Detail aus einem Kolben nach einem zweiten Ausführungsbeispiel des ersten Aspekts der Erfindung, bei welchem eine in Umfangsrichtung umlaufende Nut 29 in die Stützfläche 23 des Kolbenunterteils 11 eingebracht ist. Auch dieser Nut 29 kann das Schmieröl über den Schlitz 21 zugeführt werden.

Um die Versorgung der Nut 28 des Ausführungsbeispiels der Fig. 1, 2 oder der Nut 29 des Ausführungsbeispiels der Fig. 3 mit Schmieröl zu verbessern, ist im Ausführungsbeispiel der Fig. 4 in die Kühlölführhülse 19 mindestens eine sich in Radialrichtung erstreckende, die Kühlölführhülse 19 durchdringende Ausnehmung 30 eingebracht.

In Fig. 4 sind mindestens zwei derartige Ausnehmungen 30 in die Kühlölführhülse 19 eingebracht. Über diese Ausnehmungen 30 ist dem Bereich zwischen der Kühlölführhülse 19 und dem Kolbenunterteil 11 Schmieröl zuführbar, insbesondere ist dieses Schmieröl über die jeweilige Ausnehmung 30 der jeweiligen Nut 28, 29 zuführbar.

Es sei an dieser Stelle darauf hingewiesen, dass auch sowohl in die Kühlölführhülse 19 die Nut 28 als auch gleichzeitig in das Kolbenunterteil 11 die Nut 29 eingebracht sein kann. In diesem Fall kann dann über die Ausnehmungen 30 beiden Nuten 28, 29 Öl zugeführt werden.

Nach einem zweiten Aspekt der hier vorliegenden Erfindung ist vorgesehen, dass in die vorzugsweise kegelstumpfartig konturierte Führungsfläche 22 der Kühlölführhülse 19 und/oder in die Stützfläche 23 des Kolbenunterteils 11 mindestens eine in Umfangsrichtung begrenzte Öltasche 31 eingebracht ist. Fig. 5 zeigt eine Seitenansicht einer Kühlölführhülse 19 nach dem zweiten Aspekt der Erfindung, wobei in Fig. 5 in die Führungsfläche 22 der Kühlölführhülse 19 mehrere in Umfangsrichtung begrenzte Öltaschen 31 eingebracht sind.

Obwohl in den Figuren nicht gezeigt, können derart in Umfangsrichtung begrenzte Öltaschen 31 zusätzlich oder alternativ auch in die Stützfläche 23 des Kolbenunterteils 11 eingebracht sein.

Ferner ist es möglich, den ersten Aspekt und den zweiten Aspekt der Erfindung miteinander zu kombinieren, also sowohl eine in Umfangsrichtung umlaufende Nut 28 und/oder 29 in Kombination mit den Öltaschen 31 zu nutzen. Dabei sind beliebige Kombinationen denkbar.

So können zum Beispiel in die Führungsfläche 22 der Kühlölführhülse 19 eine umlaufende Nut 28 und in die Stützfläche 23 des Kolbenunterteils 11 mehrere Öltaschen eingebracht sein. Auch ist es möglich, in die Führungsfläche 22 der Kühlölführhülse 19 mehrere in Umfangsrichtung begrenzte Öltaschen 31 einzubringen und in die Stützfläche 23 des Kolbenunterteils 11 eine umlaufende Nut 29.

Ferner ist es auch in Fig. 5 möglich, dass in die Kühlölführhülse 19 wiederum mindestens eine, vorzugsweise mindestens zwei, sich in Radialrichtung erstreckende, die Kühlölführhülse 19 durchdringende Ausnehmung oder Ausnehmungen 30 eingebracht ist oder sind, über die Schmieröl einem Bereich zwischen der Kühlölführhülse 19 und dem Kolbenunterteil 11 zuführbar ist, insbesondere derart, dass über die jeweilige Ausnehmung 30 das Schmieröl der jeweiligen Öltasche 31 zuführbar ist.

Mit der Erfindung ist es möglich, einen Kontaktbereich zwischen der Kühlölführhülse 19 und dem Kolbenunterteil 11 definiert mit Schmieröl zu versorgen, um Reibung und Verschleiß zwischen Kühlölführhülse 19 und Kolbenunterteil 11 zu minimieren oder gar vollständig zu vermeiden.

Die Erfindung kommt insbesondere bei Kolben von Großmotoren wie Dieselmotoren oder Gasmotoren oder Diesel-Gas-Motoren im Schiffsbereich zum Einsatz, deren Außendurchmesser insbesondere im Bereich zwischen 100 mm und 600 mm liegt.

### Bezugszeichenliste

- 10: Kolbenoberteil
- 11: Kolbenunterteil
- 12: Kolben
- 13: Pleuelstange
- 14: Pleuelkopf
- 15: Kühlraum
- 16: Kühlraum
- 17: Überleitbohrung
- 18: Bohrung
- 19: Kühlölführhülse
- 20: Kühlölströmung
- 21: Schlitz
- 22: Führungsfläche
- 23: Stützfläche
- 24: Führungsfläche
- 25: Stützfläche
- 26: Ende
- 27: Ende
- 28: Nut
- 29: Nut
- 30: Ausnehmung
- 31: Öltasche

## Patentansprüche

1. Kolben einer Brennkraftmaschine,
mit einem Kolbenoberteil (10),
mit einem mit dem Kolbenoberteil (10) verbundenem Kolbenunterteil (11),
mit einem Kolbenbolzen (12), der im Kolbenunterteil (11) gelagert ist und der Anbindung des Kolbens an eine Pleuelstange (13) der Brennkraftmaschine dient,
mit einem zwischen dem Kolbenoberteil (10) und dem Kolbenunterteil (11) ausgebildeten ersten Kühlraum (15) für Kühlöl zur Kühlung des Kolbens, wobei der erste Kühlraum (15) über mindestens eine Überleitbohrung (17) mit einem zwischen dem Kolbenoberteil (10) und einem Kolbenunterteil (11) aus-gebildeten zweiten Kühlraum (16) verbunden ist,
mit einer Kühlölführhülse (19), welche der Führung von durch eine Bohrung (18) in der Pleuelstange (13) geführtem Kühlöl in Richtung auf den ersten Kühlraum (15) dient, wobei eine Führungsfläche (22) der Kühlölführhülse (19) an eine Stützfläche (23) des Kolbenunterteils (11) angrenzt, wobei
in die Führungsfläche (22) der Kühlölführhülse (19) und/oder in die Stützfläche (23) des Kolbenunterteils (11) mindestens eine in Umfangsrichtung umlaufende Nut (28, 29) eingebracht ist, **dadurch gekennzeichnet, dass**
die Kühlölführhülse (19) als geschlitze Hülse mit einem sich in Axialrichtung erstreckenden Schlitz (21) ausgebildet ist, die mit der Führungsfläche (22) federelastisch gegen die Stützfläche (23) des Kolbenunterteils (11) drückt, wobei Schmieröl über den Schlitz in die jeweilige Nut (28, 29) der Kühlölführhülse (19) und/oder des Kolbenunterteils (11) eintritt.

2. Kolben nach Anspruch 1, **dadurch gekennzeichnet, dass** in die Kühlölführhülse (19) mindestens eine Ausnehmung (30), vorzugsweise mindestens zwei Ausnehmungen (30), die sich in Radialrichtung erstreckt und die Kühlölführhülse (18) durchdringt, eingebracht ist, über die Schmieröl einem Bereich zwischen der Kühlölführhülse (19) und dem Kolbenunterteil (11) zuführbar ist.

3. Kolben nach Anspruch 2, **dadurch gekennzeichnet, dass** über die jeweilige Ausnehmung (30) das Schmieröl der jeweiligen Nut (28, 29) der Kühlölführhülse (19) und/oder des Kolbenunterteils (11) zuführbar ist.

4. Kolben nach einem der Ansprüche 1 bis 3, **dadurch gekennzeichnet, dass** in die Führungsfläche (22) der Kühlölführhülse (19) und/oder in die Stützfläche (23) des Kolbenunterteils (11) mindestens eine Öltasche (31), vorzugsweise mindestens zwei Öltaschen (31), die Umfangsrichtung begrenzt ist, eingebracht ist.

5. Kolben einer Brennkraftmaschine,
mit einem Kolbenoberteil (10),
mit einem mit dem Kolbenoberteil (10) verbundenem Kolbenunterteil (11),
mit einem Kolbenbolzen (12), der im Kolbenunterteil (11) gelagert ist und der Anbindung des Kolbens an eine Pleuelstange (13) der Brennkraftmaschine dient,
mit einem zwischen dem Kolbenoberteil (10) und dem Kolbenunterteil (11) ausgebildeten ersten Kühlraum (15) für Kühlöl zur Kühlung des Kolbens, wobei der erste Kühlraum (15) über mindestens eine Überleitbohrung (17) mit einem zwischen dem Kolbenoberteil (10) und einem Kolbenunterteil (11) ausgebildeten zweiten Kühlraum (16) verbunden ist,
mit einer Kühlölführhülse (19), welche der Führung von durch eine Bohrung (18) in der Pleuelstange (13) geführtem Kühlöl in Richtung auf den ersten Kühlraum (15) dient, wobei eine Führungsfläche (22) der Kühlölführhülse (19) an eine Stützfläche (23) des Kolbenunterteils (11) angrenzt,
**dadurch gekennzeichnet, dass**
in die Führungsfläche (22) der Kühlölführhülse (19) und/oder in die Stützfläche (23) des Kolbenunterteils (11) mindestens eine in Umfangsrichtung begrenzte Öltasche (31) eingebracht ist.

6. Kolben nach Anspruch 5, **dadurch gekennzeichnet, dass** in die Kühlölführhülse (19) mindestens eine Ausnehmung (30), vorzugsweise mindestens zwei Ausnehmungen (30), die sich in Radialrichtung erstreckt und die Kühlölführhülse (18) durchdringt, eingebracht ist,über die Schmieröl einem Bereich zwischen der Kühlölführhülse (19) und dem Kolbenunterteil (11) zuführbar ist.

7. Kolben nach Anspruch 6, **dadurch gekennzeichnet, dass** über die jeweilige Ausnehmung (30) das Schmieröl der jeweiligen Öltasche (31) der Kühlölführhülse (19) und/oder des Kolbenunterteils (11) zuführbar ist.

8. Kolben nach einem der Ansprüche 5 bis 7, **dadurch gekennzeichnet, dass** die Kühlölführhülse (19) als geschlitze Hülse mit einem sich in Axialrichtung erstrechenden Schlitz (21) ausgebildet ist, die mit der Führungsfläche (22) federelastisch gegen die Stützfläche (23) des Kolbenunterteils (11) drückt.

## Claims

1. A piston of an internal combustion engine,
with a piston upper part (10),
with a piston lower part (11) connected to the piston upper part (10),
with a piston pin (12), which is mounted in the piston lower part (11) and serves for connecting the piston to a connecting rod (13) of the internal combustion engine,
with a first cooling space (15) formed between the piston upper part (10) and the piston lower part (11) for cooling oil for cooling the piston,
wherein the first cooling space (15) is connected via at least one overflow bore (17) to a second cooling space (16) formed between the piston upper part (10) and a piston lower part (11),
with a cooling oil guide sleeve (19), which serves for guiding of cooling oil conducted through a bore (18) in the connecting rod (13) in the direction of the first cooling space (15), wherein a guide surface (22) of the cooling oil guide sleeve (19) adjoins a support surface (23) of the piston lower part (11),
wherein at least one circumferential groove (28, 29) in the circumferential direction is introduced into the guide surface (22) of the cooling oil guide sleeve (19) and/or into the support surface (23) of the piston lower part (11),
**characterised**
**in that** the cooling oil guide sleeve (19) is designed as a slit sleeve with a slit (21) extending in the axial direction, which with the guide surface (22) spring-elastically presses against the support surface (23) of the piston lower part (11),
wherein lubricating oil via the slit enters the respective groove (28, 29) of the cooling oil guide sleeve (19) and/or of the piston lower part (11).

2. The piston according to Claim 1, **characterised in that** into the cooling oil guide sleeve (19) at least one recess (30), preferentially at least two recesses (30), which extends in the radial direction and penetrates the cooling oil guide sleeve (18) is introduced, via which lubricating oil can be fed to a region between the cooling oil guide sleeve (19) and the piston lower part (11).

3. The piston according to Claim 2, **characterised in that** via the respective recess (30) the lubricating oil can be fed to the respective groove (28, 29) of the cooling oil guide sleeve (19) and/or of the piston lower part (11).

4. The piston according to any one of the Claims 1 to 3, **characterised in that** into the guide surface (22) of the cooling oil guide sleeve (19) and/or into the support surface (23) of the piston lower part (11) at least one oil pocket (31), preferentially at least two oil pockets (31), delimited in the circumferential direction, is introduced.

5. The piston of an internal combustion engine, with a piston upper part (10),
with a piston lower part (11) connected to the piston upper part (10),
with a piston pin (12), which is mounted in the piston lower part (11) and serves for connecting the piston to a connecting rod (13) of the internal combustion engine,
with a first cooling space (15) formed between the piston upper part (10) and the piston lower part (11) for cooling oil for cooling the piston,
wherein the first cooling space (15) is connected via at least one overflow bore (17) to a second cooling space (16) formed between the piston upper part (10) and a piston lower part (11),
with a cooling oil guide sleeve (19), which serves for guiding cooling oil conducted through a bore (18) in the connecting rod (13) in the direction of the first cooling space (15),
wherein a guide surface (22) of the cooling oil guide sleeve (19) adjoins a support surface (23) of the piston lower part (11),
**characterised in that**
into the guide surface (22) of the cooling oil guide sleeve (19) and/or into the support surface (23) of the piston lower part (11) at least one oil pocket (31) delimited in the circumferential direction is introduced.

6. The piston according to Claim 5, **characterised in that** into the cooling oil guide sleeve (19) at least one recess (30), preferentially at least two recesses (30), which extends in the radial direction and penetrates the cooling oil guide sleeve (18) is introduced via which lubricating oil can be fed to a region between the cooling oil guide sleeve (19) and the piston lower part (11).

7. The piston according to Claim 6, **characterised in that** via the respective recess (30) the lubricating oil can be fed to the respective oil pocket (31) of the cooling oil guide sleeve (19) and/or of the piston lower part (11).

8. The piston according to any one of the Claims 5 to 7, **characterised in that** the cooling oil guide sleeve (19) is formed as slit sleeve with a slit (21) extending in the axial direction, which with the guide surface (22) spring-elastically presses against the support surface (23) of the piston lower part (11).

## Revendications

1. Piston d'un moteur à combustion interne,
comportant une partie supérieure de piston (10),
comportant une partie inférieure de piston (10) reliée à la partie supérieure de piston (11),
comportant un axe de piston (12), qui est monté dans la partie inférieure de piston (11) et sert à relier le piston à une bielle (13) du moteur à combustion interne,
comportant une première chambre de refroidissement (15) pour l'huile de refroidissement refroidissant le piston, réalisée entre la partie supérieure de piston (10) et la partie inférieure de piston (11),
dans lequel la première chambre de refroidissement (15) est reliée par au moins un alésage de transfert (17) à une deuxième chambre de refroidissement (16) réalisée entre la partie supérieure de piston (10) et une partie inférieure de piston (11),
comportant un manchon de guidage d'huile de refroidissement (19), qui sert à guider l'huile de refroidissement acheminée à travers un alésage (18) dans la bielle (13) vers la première chambre de refroidissement (15), dans lequel une surface de guidage (22) du manchon de guidage d'huile de refroidissement (19) est en contact avec une surface d'appui (23) de la bielle (13) de la partie inférieure de piston (11), dans lequel
au moins une rainure circonférentielle (28, 29) dans la direction circonférentielle est ménagée dans la surface de guidage (22) du manchon de guidage d'huile de refroidissement (19) et/ou dans la surface d'appui (23) de la partie inférieure de piston (11), **caractérisé en ce que**
le manchon de guidage d'huile de refroidissement (19) est conçu comme un manchon fendu comportant une fente (21) s'étendant dans la direction axiale, qui, avec la surface de guidage (22), exerce une pression élastique contre la surface d'appui (23) de la partie inférieure de piston (11),
dans lequel l'huile de lubrification pénètre ainsi dans la rainure respective (28, 29) du manchon de guidage d'huile de refroidissement (19) et/ou de la partie inférieure de piston (11) via la fente.

2. Piston selon la revendication 1, **caractérisé en ce qu'**au moins un évidement (30), de préférence au moins deux évidements (30), est ménagé dans le manchon de guidage d'huile de refroidissement (19), qui s'étend dans la direction radiale et traverse le manchon de guidage d'huile de refroidissement (18), permettant ainsi l'acheminement d'huile de lubrification vers une zone située entre le manchon de guidage d'huile de refroidissement (19) et la partie inférieure de piston (11).

3. Piston selon la revendication 2, **caractérisé en ce que** l'huile de lubrification peut être acheminée vers la rainure respective (28, 29) du manchon de guidage d'huile de refroidissement (19) et/ou la partie inférieure de piston (11) via l'évidement respectif (30).

4. Piston selon une des revendications 1 à 3, **caractérisé en ce qu'**au moins une poche d'huile (31), de préférence au moins deux poches d'huile (31), qui est délimitée dans la direction circonférentielle, est ménagée dans la surface de guidage (22) du manchon de guidage d'huile de refroidissement (19) et/ou dans la surface d'appui (23) de la partie inférieure de piston (11).

5. Piston d'un moteur à combustion interne, comportant une partie supérieure de piston (10),
comportant une partie inférieure de piston (10) reliée à la partie supérieure de piston (11),
comportant un axe de piston (12), qui est monté dans la partie inférieure de piston (11) et sert à relier le piston à une bielle (13) du moteur à combustion interne,
comportant une première chambre de refroidissement (15) pour l'huile de refroidissement refroidissant le piston, réalisée entre la partie supérieure de piston (10) et la partie inférieure de piston (11),
dans lequel la première chambre de refroidissement (15) est reliée par au moins un alésage de transfert (17) à une deuxième chambre de refroidissement (16) réalisée entre la partie supérieure de piston (10) et une partie inférieure de piston (11),
comportant un manchon de guidage d'huile de refroidissement (19), qui sert à guider l'huile de refroidissement acheminée à travers un alésage (18) dans la bielle (13) vers la première chambre de refroidissement (15),
dans lequel une surface de guidage (22) du manchon de guidage d'huile de refroidissement (19) est en contact avec une surface d'appui (23) de la bielle (13) de la partie inférieure de piston (11),
**caractérisé en ce que**
au moins une poche d'huile (31), délimitée dans la direction circonférentielle est ménagée dans la surface de guidage (22) du manchon de guidage d'huile de refroidissement (19) et/ou dans la surface d'appui (23) de la partie inférieure de piston (11).

6. Piston selon la revendication 5, **caractérisé en ce que** dans le manchon de guidage d'huile de refroidissement (19) est ménagé au moins un évidement (30), de préférence au moins deux évidements (30), qui s'étendent dans la direction radiale et traversent le manchon de guidage d'huile de refroidissement (18), permettant ainsi l'acheminement d'huile de lubrification vers une zone située entre le manchon de guidage d'huile de refroidissement (19) et la partie inférieure de piston (11).

7. Piston selon la revendication 6, **caractérisé en ce que** l'huile de lubrification peut être acheminée vers la poche d'huile respective (31) du manchon de guidage d'huile de refroidissement (19) et/ou la partie inférieure de piston (11) via l'évidement respectif (30).

8. Piston selon une quelconque des revendications 5 à 7, **caractérisé en ce que** le manchon de guidage d'huile de refroidissement (19) est conçu comme un manchon fendu comportant une fente (21) s'étendant dans la direction axiale, qui, avec la surface de guidage (22), exerce une pression élastique contre la surface d'appui (23) de la partie inférieure de piston (11).
